# FASCICULE DE BREVET EUROPEEN

(11) **EP 4 173 963 B1**
(45) Date de publication et mention de la délivrance du brevet: **29.05.2024**
(21) Numéro de dépôt: 22179263.3
(22) Date de dépôt: 15.06.2022
(51) Int. Cl.: B64D 41/00, B64C 27/82

(54) **AERONEF MUNI D'UN SYSTEME DE REFROIDISSEMENT POUR UNE PILE A COMBUSTIBLE EMBARQUEE**
LUFTFAHRZEUG MIT EINEM KÜHLSYSTEM FÜR EINE BORDSEITIGE BRENNSTOFFZELLE
AIRCRAFT PROVIDED WITH A COOLING SYSTEM FOR AN ONBOARD FUEL CELL

(30) Priorité: 28.10.2021 FR 2111483
(43) Date de publication de la demande: 03.05.2023
(73) Titulaire: Airbus Helicopters, 13725 Marignane Cedex (FR)
(72) Inventeur: GARCIN, Patrice, 13820 ENSUES-LA-REDONNE (FR); SERR, Christophe, 13109 SIMIANE-COLLONGUE (FR)
(74) Mandataire: GPI Brevets

(56) Documents cités:
- EP-A1- 3 476 731
- US-A1- 2018 319 288
- US-A1- 2020 388 865

## Description

Un aéronef peut comprendre une pile à combustible pour alimenter électriquement un ou plusieurs organes à fonctionnement électrique. Une telle pile à combustible peut, par exemple, alimenter électriquement un moteur électrique permettant de mettre en mouvement un rotor d'un aéronef, tel qu'un rotor de sustentation voire de propulsion, un rotor de contrôle du mouvement en lacet ou encore une hélice.

Une pile à combustible peut présenter l'avantage de produire de l'énergie électrique avec un faible impact environnemental. Toutefois, une pile à combustible tend à chauffer en utilisation ce qui peut rendre délicat son implantation dans un aéronef.

Dès lors, une pile à combustible peut être associée à un circuit de refroidissement. Le circuit de refroidissement peut acheminer un fluide caloporteur dans la pile à combustible. Le fluide caloporteur est ensuite refroidi dans un échangeur fluide/air avant de retourner vers la pile à combustible. En raison de la forte énergie calorifique à évacuer, l'échangeur thermique est ventilé par un ventilateur électrique, lui aussi alimenté électriquement par la pile à combustible. Un tel ventilateur est particulièrement utile lorsque l'échangeur thermique est insuffisamment ventilé, par exemple en présence d'un faible vent relatif soit à faible vitesse d'avancement au sein d'un aéronef.

Par ailleurs, certains aéronefs peuvent rester dans une position sensiblement stationnaire en vol. Par exemple, l'aéronef peut être un aéronef à voilure tournante comprenant un rotor de sustentation mis en rotation par un moteur électrique, ce moteur électrique étant alimenté électriquement par une pile à combustible. La puissance électrique à fournir au moteur électrique pour assurer le vol est alors maximale durant cette phase de vol stationnaire. Dès lors, la chaleur générée par la pile à combustible et à évacuer est maximale dans une phase de vol durant laquelle l'aéronef est de fait faiblement ventilé par le vent relatif. Pour ventiler l'échangeur thermique, le ventilateur électrique doit alors aussi recevoir une énergie électrique maximisée, ce qui va à l'encontre de la fourniture d'un maximum d'énergie électrique au moteur électrique. Il est à noter que l'état de la technique relatif aux automobiles équipées d'une pile à combustible va à l'encontre de cette problématique puisqu'au contraire une automobile n'est pas sujette à un fort échauffement de la pile à combustible à l'arrêt.

En outre, un système de refroidissement pour pile à combustible muni d'un échangeur thermique classique associé à un ventilateur peut présenter l'inconvénient d'être relativement lourd et encombrant, de fait au détriment de la charge utile et du volume utile de l'aéronef.

Le document EP 3 476 731 A1 décrit un giravion muni d'une poutre de queue portant une carène logeant un système de rotor primaire et un système de rotor secondaire. Le giravion comprend un moteur pour fournir un couple mécanique au système de rotor primaire. De plus, le giravion comprend un système électrique relié électriquement au système de rotor secondaire. Le système électrique peut comprendre un générateur électrique , une batterie électrique et une pile à combustible.

Les documents US 2018/319288 A1 et US 2020/388865 A1 sont aussi connus.

La présente invention a alors pour objet de proposer un aéronef ayant une pile à combustible refroidie par un système de refroidissement innovant.

L'invention vise ainsi un aéronef muni d'une pile à combustible et d'une poutre de queue portant un rotor caréné, le rotor caréné comprenant une carène délimitant une veine d'air, le rotor caréné comprenant un rotor mobile en rotation dans ladite veine d'air.

L'aéronef comprend un système de refroidissement pour refroidir la pile à combustible, le système de refroidissement étant muni d'un circuit de refroidissement dans lequel circule un fluide caloporteur, le circuit de refroidissement comprenant un conduit de captation cheminant dans la pile à combustible ou à côté de la pile à combustible, le circuit de refroidissement comprenant un échangeur thermique en communication fluidique avec le conduit de captation, le système de refroidissement comprenant un système de ventilation muni d'au moins une ouverture de sortie ménagée dans le rotor caréné pour ventiler ledit échangeur thermique au moins par aspiration selon un sens de circulation.

En fonctionnement, le rotor caréné permet de faire circuler de l'air dans la veine d'air. En raison de l'emplacement de la ou des ouvertures de sortie, l'air circulant dans la veine d'air génère de plus une circulation forcée d'air dans l'aéronef permettant de ventiler l'échangeur thermique. Le flux d'air mis en mouvement dans la veine d'air génère une aspiration mettant en mouvement l'air présent dans l'aéronef pour ventiler l'échangeur thermique.

A basse vitesse voire durant un vol stationnaire, le flux d'air traversant la veine d'air est maximal. Cette caractéristique d'un rotor caréné permet d'optimiser la ventilation de l'échangeur thermique dans une phase durant laquelle cet échangeur thermique est particulièrement sollicité.

A l'inverse, le flux d'air traversant la veine d'air est plus faible dans une phase de vol d'avancement à vitesse élevée. Toutefois, cette phase de vol correspond aussi à une phase durant laquelle l'échangeur thermique doit évacuer moins de chaleur et/ou durant laquelle l'avancement de l'aéronef peut permettre d'alimenter en air l'échangeur thermique dynamiquement.

Par suite, cet aéronef utilise les spécificités d'un rotor caréné pour faire circuler de l'air au travers d'un échangeur thermique air/fluide afin de refroidir une pile à combustible. Cet agencement peut permettre d'éviter de mettre en oeuvre un ventilateur dédié encombrant, lourd et consommateur d'énergie électrique. Le système de refroidissement peut ainsi être dépourvu d'un ventilateur pour ventiler l'échangeur thermique.

Cet aéronef peut comprendre une ou plusieurs des caractéristiques qui suivent, prises seules ou en combinaison.

Par exemple, l'aéronef peut comporter une ouverture d'entrée en amont de l'échangeur thermique selon ledit sens de circulation et reliant fluidiquement un air extérieur et l'échangeur thermique.

L'air extérieur frais pénètre dans l'aéronef via l'ouverture d'entrée, traverse l'échangeur thermique, puis circule dans l'aéronef avant d'être expulsé en dehors de l'aéronef par le rotor caréné via la ou les ouvertures de sortie.

Selon une possibilité compatible avec les précédentes, ledit aéronef peut comporter une écope en vis-à-vis de l'ouverture d'entrée.

Une telle écope forme un déflecteur dirigeant l'air dynamiquement vers une ouverture d'entrée lors de l'avancement de l'aéronef.

Selon une possibilité compatible avec les précédentes, le système de ventilation peut comporter un canal de ventilation forcée recevant un air de ventilation traversant ledit échangeur thermique selon le sens de circulation, ledit canal de ventilation forcée traversant au moins en partie la poutre de queue et atteignant au moins une liaison fluidique débouchant sur ladite au moins une ouverture de sortie.

Selon une possibilité compatible avec les précédentes, ladite au moins une liaison fluidique peut être au moins partiellement disposée dans ladite carène.

Chaque liaison fluidique est fluidiquement connectée à une ou plusieurs ouvertures de sortie et au canal de ventilation forcée. Chaque liaison fluidique s'étend au moins dans la carène et le canal de ventilation forcée s'étend au moins dans la poutre de queue.

Selon une possibilité compatible avec les précédentes, la poutre de queue peut délimiter ledit canal de ventilation.

Une paroi de la poutre de queue en tant que telle délimite le canal de ventilation forcée.

Alternativement, l'aéronef peut comporter une conduite de ventilation formant au moins partiellement le canal de ventilation forcée, ladite conduite de ventilation étant disposée dans la poutre de queue.

Selon une possibilité compatible avec les précédentes, ladite au moins une ouverture de sortie peut comporter une ouverture de sortie dans ladite veine d'air.

Par exemple, au moins une ouverture de sortie prend la forme d'une fente de la carène débouchant sur la veine d'air pour permettre d'aspirer l'air ventilant l'échangeur thermique avec le rotor caréné.

Selon une possibilité compatible avec les précédentes, ledit rotor caréné peut comporter un redresseur dans ladite veine, ledit redresseur comprenant au moins un bras, ladite au moins une ouverture de sortie comportant une ouverture de sortie de redresseur ménagée sur ledit bras, ledit bras étant au moins partiellement creux.

Une liaison fluidique peut ainsi cheminer dans le bras pour que l'ouverture de sortie soit dans la veine d'air.

Le bras s'étendant selon un axe d'une zone de bord d'attaque vers une zone de bord de fuite, une ouverture de sortie de redresseur peut être située dans la zone de bord de fuite.

Selon une possibilité compatible avec les précédentes, ladite au moins une ouverture de sortie peut comporter une ouverture de sortie de convergent ménagée dans un convergent de la carène.

Selon une possibilité compatible avec les précédentes, ladite au moins une ouverture de sortie peut comporter une ouverture de sortie de divergent ménagée dans un divergent de la carène.

Selon une possibilité compatible avec les précédentes, ladite veine s'étendant d'une section d'entrée vers une section de sortie selon un sens de déplacement de l'air allant d'un convergent vers un divergent de la carène, ladite au moins une ouverture de sortie peut comporter une ouverture de sortie externe dirigée vers la section de sortie ou la section d'entrée.

Les variantes précédentes sont compatibles les unes avec les autres. Par exemple, le rotor caréné présente une ou plusieurs ouvertures de sortie dans un bras, une ou plusieurs ouvertures de sortie de convergent, une ou plusieurs ouvertures de sortie de divergent, et/ou une ou plusieurs ouvertures de sortie externe.

Selon une possibilité compatible avec les précédentes, le système de ventilation peut comporter un contrôleur de débit d'air.

Par exemple, un tel contrôleur de débit d'air comporte un volet mobile ou un équivalent pour régler la surface de passage d'une ouverture d'entrée ou d'une ouverture de sortie ou d'un canal voire d'une liaison fluidique en fonction de la vitesse air de l'aéronef. Un tel volet peut alors être piloté par un actionneur commandé par un contrôleur en communication avec un senseur de vitesse air.

Selon une possibilité compatible avec les précédentes, l'échangeur thermique peut être disposé dans la poutre de queue ou dans une structure solidaire de la poutre de queue.

L'échangeur thermique peut être positionné à proximité immédiate de la poutre de queue pour faciliter l'agencement du système de ventilation.

Selon une possibilité compatible avec les précédentes, l'aéronef peut comporter un moteur électrique alimenté électriquement par ladite pile à combustible, ledit moteur électrique mettant en rotation au moins un organe motorisé participant au déplacement de l'aéronef dans l'air, à savoir le rotor du rotor caréné et/ou une voilure tournante et/ou une hélice par exemple.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention en vol stationnaire,
la figure 2, un schéma illustrant un aéronef selon l'invention en vol d'avancement,
la figure 3, une vue en coupe d'un rotor caréné selon l'invention,
la figure 4, une vue en coupe d'un rotor caréné selon l'invention,
la figure 5, une vue en coupe d'un rotor caréné selon l'invention,
la figure 6, une vue en coupe d'un rotor caréné selon l'invention, et
la figure 7, un schéma illustrant un contrôleur de débit d'air.

Les éléments présents dans plusieurs figures distinctes sont affectés d'une seule et même référence.

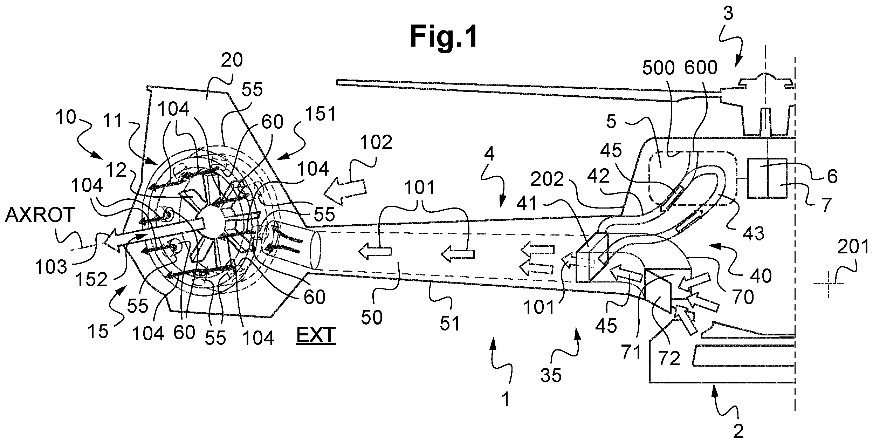

La figure 1 présente un aéronef 1 selon l'invention muni d'un rotor caréné 10 porté par une poutre de queue 4. L'aéronef 1 peut en outre comprendre un organe motorisé 3 participant au déplacement de l'aéronef dans l'air. Un tel organe motorisé 3 peut comprendre une ou plusieurs voilures tournantes 3, un ou plusieurs rotors une ou plusieurs hélices... Par exemple, l'aéronef 1 est un hélicoptère comprenant un rotor 11 et une voilure tournante 3 mis en mouvement par un ou des moteurs électriques.

L'aéronef 1 peut comprendre une structure porteuse 2 qui s'étend longitudinalement le long d'un plan antéropostérieur d'une extrémité arrière 202 à une zone avant 201 non représentée. Cette structure porteuse 2 peut être prolongée à partir de son extrémité arrière 202 par une poutre de queue 4 portant le rotor caréné 10. Eventuellement, la structure porteuse 2 porte un ou des organes motorisés de sustentation et/ou de propulsion 3.

Indépendamment de la forme de l'aéronef 1, le rotor caréné 10 comporte une carène 20 portée par la poutre de queue 4. De plus, le rotor caréné 10 comporte un rotor 11 disposé dans la carène 20. En particulier, le rotor 11 comporte une pluralité de pales 12. Les pales 12 effectuent conjointement un mouvement rotatif autour d'un axe de rotation AXROT.

Plus précisément, la carène 20 comporte un carénage délimitant une veine d'air 15. Le carénage peut présenter une symétrie de révolution par rapport à l'axe de rotation AXROT. Indépendamment de cet aspect, l'air EXT circule dans la veine d'air 15, selon un sens 102 de déplacement de l'air au sein de la carène 20, d'une section d'entrée 151 vers une section de sortie 152 de la veine d'air.

Par ailleurs, l'aéronef 1 comporte une pile à combustible 5. Par exemple, cette pile à combustible 5 alimente électriquement un moteur électrique 6 mettant en mouvement, directement ou via un système de transmission de puissance 7, un ou des organes motorisés 3 de sustentation et/ou de propulsion 3 et/ou le rotor 11.

L'expression « pile à combustible » désigne une unique pile à combustible, éventuellement à hydrogène, ou plusieurs piles à combustible en série ou en parallèle.

L'aéronef 1 comprend un système de refroidissement 35 pour refroidir la pile à combustible 5.

Ce système de refroidissement 35 est muni d'un circuit de refroidissement 40 dans lequel circule un fluide caloporteur 45. En particulier, le circuit de refroidissement 40 peut comprendre un conduit de captation 42 qui passe dans la pile à combustible 5, à savoir dans un boitier 500 de la pile à combustible, ou à côté de la pile à combustible 5, par exemple contre un boitier 500 de la piale à combustible.

Le terme « conduit » désigne un ou plusieurs tubes, tuyaux, passages d'une structure ou équivalents dans lesquels circule le fluide caloporteur 45.

De plus, le circuit de refroidissement 40 comprend un échangeur thermique 41 fluide/air. L'échangeur thermique 41 peut être disposé dans la poutre de queue 4 selon l'exemple illustré en traits pleins ou dans la structure porteuse 2 selon l'exemple illustré en traits discontinus. L'échangeur thermique 41 peut être formé par une structure de l'aéronef 1, par exemple par la poutre de queue 4 en tant que telle.

L'échangeur thermique 41 est en communication fluidique avec le conduit de captation 42, à savoir relié fluidiquement au conduit de captation 42. De plus, l'échangeur thermique 41 est relié à un conduit de retour 43 débouchant sur le conduit captation 42. Dès lors, le fluide caloporteur 45 reçoit de la pile à combustible 5 une énergie calorifique pour la refroidir, puis est refroidi dans l'échangeur thermique 41 avant de retourner dans le conduit de captation 42 via le conduit de retour 43. Le circuit de refroidissement peut comprendre au moins une pompe pour faire circuler le fluide caloporteur 45, au moins un filtre...

Pour refroidir le fluide caloporteur 45, l'échangeur thermique 41 est traversé par un air de ventilation qui circule selon un sens de circulation 101.

Dès lors, le système de refroidissement 35 comprend un système de ventilation. Ce système de ventilation comprend une ou plusieurs ouvertures de sortie 60 ménagées dans le rotor caréné 10 pour aspirer de l'air, cet air ventilant l'échangeur thermique 41 en se déplaçant selon un sens de circulation 101. Eventuellement, l'aéronef 1 peut comprendre plusieurs ouvertures de sortie 60 dans un même plan et réparties en azimut autour de l'axe de rotation AXROT, voire équiréparties en azimut autour de l'axe de rotation AXROT.

Par exemple, le système de ventilation peut comprendre un canal de ventilation forcée 50. Le canal de ventilation forcée 50 est en communication fluidique avec l'échangeur thermique 41 afin de capter l'air de ventilation traversant cet échangeur thermique 41. Le canal de ventilation forcée 50 est donc en aval de l'échangeur thermique 41 selon le sens de circulation 101.

Le canal de ventilation forcée 50 traverse au moins en partie, voire totalement la poutre de queue 4. A cet effet, au moins un tronçon de la poutre de queue 4 en tant que telle délimite/forme le canal de ventilation forcée 50. Selon l'alternative illustrée en traits discontinus, une conduite de ventilation 51 est disposée dans la poutre de queue 4 et forme au moins partiellement le canal de ventilation forcée 50.

Indépendamment de la nature de la conduite de ventilation forcée 50, cette conduite de ventilation forcée 50 débouche sur une ou plusieurs liaisons fluidiques 55. En présence d'une seule ou de plusieurs liaisons fluidiques 55, chaque liaison fluidique 55 comprend une conduite ménagée dans la carène 20. La carène peut être entièrement creuse, l'espace interne de la carène formant une liaison hydraulique. En présence d'une seule ou de plusieurs liaisons fluidiques 55, chaque liaison fluidique 55 débouche sur une ou plusieurs ouvertures de sortie 60 ménagées dans le rotor caréné 10 à l'interface avec l'air EXT extérieur à l'aéronef 1.

Alternativement ou de manière complémentaire, le système de ventilation peut comporter au moins une ouverture d'entrée 71 1 située à l'interface avec l'air EXT extérieur. Par exemple, cette ouverture d'entrée 71 est ménagée sur une peau de la structure porteuse 2 ou de la poutre de queue 4. L'ouverture d'entrée 71 est placée en amont de l'échangeur thermique 41 selon le sens de circulation 101. De l'air frais peut ainsi traverser l'ouverture d'entrée 71, puis traverse l'échangeur thermique 41 et atteint le canal de ventilation forcée 50.

Un canal d'entrée d'air 70 peut relier fluidiquement l'ouverture d'entrée 71 et l'échangeur thermique 41 selon le sens de circulation 101. Le canal d'entrée d'air 70 est ainsi en amont de l'échangeur thermique 41 selon le sens de circulation 101 et relié à l'ouverture d'entrée 71.

Eventuellement, le système de ventilation comporte une écope 72 pour diriger l'air dans l'ouverture d'entrée 41 lors de son avancement.

Par suite, l'air traversant la veine d'air 15 permet d'aspirer l'air présent dans le système de ventilation via la ou les ouvertures de sortie. L'agencement d'un ventilateur encombrant, lourd et consommateur d'énergie électrique n'est pas obligatoire puisque c'est le rotor caréné 10 en tant que tel qui peut générer la circulation de l'air dans l'échangeur thermique 41. C'est la raison pour laquelle le canal 50 est dénommé « canal de ventilation forcée » par commodité.

La figure 1 illustre le fonctionnement d'un aéronef 1 à moteur électrique durant une phase de vol stationnaire. Durant une telle phase de vol stationnaire, l'ouverture d'entrée 71 n'est pas alimentée en air dynamiquement, à savoir suite à l'avancement de l'aéronef 1. Par contre, durant une phase de vol stationnaire, le rotor 11 est de fait fortement sollicité pour maintenir l'aéronef 1 en position, et contrer le couple exercé sur la structure porteuse 2 par une voilure tournante 3 le cas échéant. Un flux d'air important circule alors dans la veine d'air 15 selon la flèche 103. Il en résulte une forte aspiration au sein du système de ventilation ventilant l'échangeur thermique 41. Cette aspiration permet à de l'air de pénétrer dans l'ouverture d'entrée 71 éventuelle, de traverser le canal d'entrée 70 éventuel, puis l'échangeur thermique 41 et le canal de ventilation de sortie 50 éventuel, avant de sortir par les ouvertures de sortie 60 en passant au préalable par la ou les liaisons fluidiques 55 éventuelles.

Le fonctionnement particulier du rotor caréné 10 permet d'acheminer un maximum d'air vers l'échangeur thermique 41 durant la phase de vol stationnaire. Cette caractéristique est avantageuse car cette phase de vol stationnaire correspond à une phase de vol durant laquelle la pile à combustible 5 est susceptible de beaucoup chauffer en devant fournir une grande quantité d'énergie électrique au ou aux moteurs électriques 6.

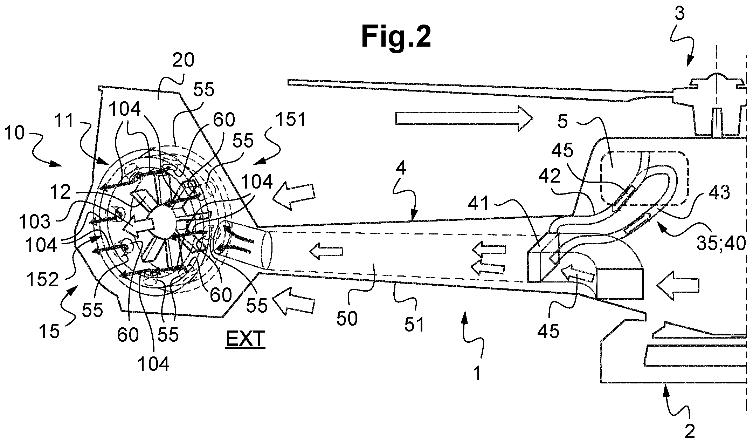

La figure 2 illustre le fonctionnement d'un aéronef 1 à moteur électrique durant une phase de vol d'avancement. Durant une phase de vol d'avancement, le rotor 11 est de fait moins sollicité qu'en vol stationnaire, du moins en présence d'une vitesse d'avancement moyenne. La carène 20 peut former en effet une dérive tendant à stabiliser l'aéronef 1 en lacet. Un flux d'air moins important circule alors dans la veine d'air 15 selon la flèche 103. Il en résulte une aspiration plus faible au sein du système de ventilation ventilant l'échangeur thermique 41 par rapport au cas de vol précédent. Toutefois, durant une telle phase de vol, la pile à combustible 5 est susceptible de moins chauffer en devant fournir une plus faible quantité d'énergie électrique au ou aux moteurs électriques 6, comparé au cas précédent. De plus, l'ouverture d'entrée 71 peut être alimentée en air dynamiquement.

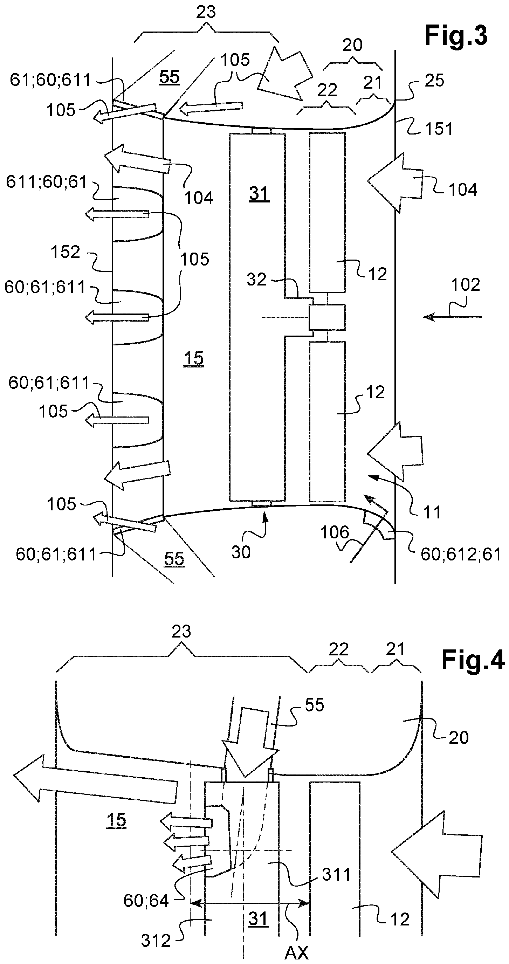

Les figures 3 à 6 illustrent diverses ouvertures de sortie 60. Les agencements de ces figures 3 à 6 peuvent être combinés.

Selon la figure 3, le carénage de la carène 20 délimitant la veine d'air 15 peut comporter successivement un convergent 21, un chemin de pales 22 par exemple cylindrique, puis un divergent 23. Le terme « convergent » désigne une partie du carénage qui se rétrécit selon le sens 102 de déplacement alors que le terme « divergent » désigne au contraire une partie du carénage qui s'élargit selon le sens 102 de déplacement.

Dès lors, la section d'entrée 151 est délimitée par la plus grande section du convergent 21 orthogonalement à l'axe de rotation AXROT et la section de sortie 152 est délimitée par la plus grande section du divergent 23 orthogonalement à l'axe de rotation AXROT. Les pales 12 sont disposées dans la veine d'air 15, et notamment dans le chemin de pales 22. Les pales 12 peuvent être articulées à un moyeu porté par un support 32 d'un redresseur 30. Le redresseur 30 comprend des bras 31 reliant le support 32 à la carène 20. On se référera si besoin à la littérature qui décrit un tel système.

Selon les figures 3 et 4, au moins une ouverture de sortie 60 comporte une ouverture de sortie 61 débouchant sur la veine d'air 15.

La référence 60 désigne tout type d'ouverture de sortie, les références 61 à 64, 611, 612 désignant respectivement des types particuliers d'ouvertures de sortie.

Dès lors, au moins une ouverture de sortie 60 peut comporter selon la figure 3 une ouverture de sortie de divergent 611 ménagée dans le divergent 23 de la carène 20. L'air circulant dans la veine d'air 15 selon les flèches 104 aspire l'air présent dans les liaisons fluidiques 55 selon les flèches 105 via les ouvertures de sortie de divergent 611.

Au moins une ouverture de sortie 60 peut comporter selon la figure 3 une ouverture de sortie de convergent 612 ménagée dans le convergent 21 de la carène 20. L'air circulant dans la veine d'air 15 selon les flèches 104 aspire l'air présent dans les liaisons fluidiques 55 selon la flèche 106 via la ou les ouvertures de sortie de convergent 612.

Selon la figure 4, au moins une ouverture de sortie 60 peut prendre la forme d'une ouverture de sortie de redresseur 64 ménagée sur un bras 31. Le bras 31 est alors au moins partiellement creux.

Par exemple, le bras 31 s'étend selon un axe AX d'une zone de bord d'attaque 311 vers une zone de bord de fuite 312. Par exemple, le bras 31 comporte deux tronçons, un premier tronçon du bras représentant la zone de bord d'attaque 311 et l'autre tronçon représentant la zone de bord de fuite 312. L'ouverture de sortie de redresseur 64 est alors par exemple située dans la zone de bord de fuite 312.

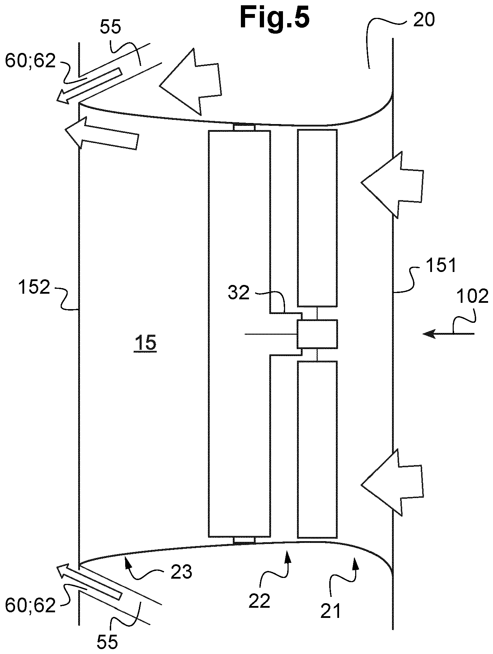

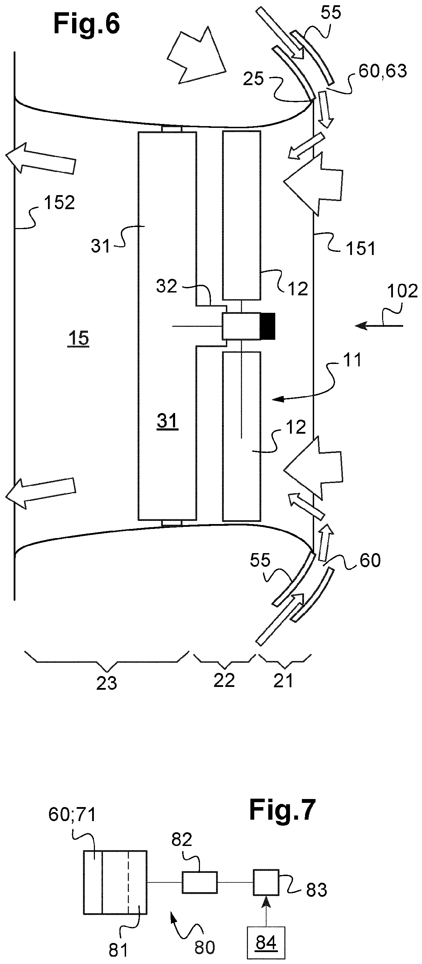

Selon les figures 5 et 6, au moins une ouverture de sortie 60 est située en dehors de la veine d'air 15, mais à proximité de la section d'entrée 151 ou de la section de sortie 152.

Ainsi, au moins une ouverture de sortie 60 peut comporter selon la figure 5 une ouverture de sortie externe 62 dirigée vers la section de sortie 152.

Selon la figure 6, au moins une ouverture de sortie 60 peut comporter une ouverture de sortie externe 63 dirigée vers la section d'entrée 151, par exemple en débouchant sur une lèvre d'entrée 24 du convergent 21. Cette lèvre d'entrée 24 délimite ainsi la section d'entrée 151.

Indépendamment des diverses possibilités précédentes et en référence à la figure 7, le système de ventilation peut être muni d'un contrôleur de débit d'air 80.

Par exemple, le contrôleur de débit d'air 80 comporte un volet mobile 81 apte à modifier la section de passage d'une ouverture de sortie 60 ou d'entrée 71, voire une liaison fluidique 55 ou encore le canal de ventilation forcée 50.

Eventuellement, le contrôleur de débit d'air 80 comporte un actionneur 82 relié au volet 81 pour le déplacer sur requête d'une unité de traitement 83.

L'unité de traitement 83 peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Par exemple, l'unité de traitement 83 est reliée à au moins un senseur de vitesse 84, tel qu'un senseur de vitesse air éventuellement. Dès lors, l'unité de traitement 83 peut être configurée pour positionner le volet 81 par rapport à une position de référence en fonction de la vitesse air.

## Revendications

1. Aéronef (1) muni d'une pile à combustible (5) et d'une poutre de queue (4) portant un rotor caréné (10), le rotor caréné (10) comprenant une carène (20) délimitant une veine d'air (15), le rotor caréné (10) comprenant un rotor (11) mobile en rotation dans ladite veine d'air (15),
**caractérisé en ce que** ledit aéronef (1) comprend un système de refroidissement (35) pour refroidir ladite pile à combustible (5), le système de refroidissement (35) étant muni d'un circuit de refroidissement (40) dans lequel circule un fluide caloporteur (45), ledit circuit de refroidissement (40) comprenant un conduit de captation (42) cheminant dans la pile à combustible (5) ou à côté de la pile à combustible (5), ledit circuit de refroidissement (40) comprenant un échangeur thermique (41) en communication fluidique avec ledit conduit de captation (42), ledit système de refroidissement (35) comprenant un système de ventilation muni d'au moins une ouverture de sortie (60) ménagée dans le rotor caréné (10) pour ventiler ledit échangeur thermique (41) au moins par aspiration selon un sens de circulation (101).

2. Aéronef selon la revendication 1,
**caractérisé en ce que** ledit aéronef (1) comporte une ouverture d'entrée (71) en amont de l'échangeur thermique (41) selon le sens de circulation (101) et reliant fluidiquement un air (EXT) extérieur à l'échangeur thermique (41).

3. Aéronef selon la revendication 2,
**caractérisé en ce que** ledit aéronef comporte une écope (72) en vis-à-vis de ladite ouverture d'entrée (71).

4. Aéronef selon l'une quelconque des revendications 1 à 3, **caractérisé en ce que** le système de ventilation comporte un canal de ventilation forcée (50) recevant un air de ventilation traversant ledit échangeur thermique (41) selon le sens de circulation (101), ledit canal de ventilation forcée (50) traversant au moins en partie la poutre de queue (4) et atteignant au moins une liaison fluidique (55) débouchant sur ladite au moins une ouverture de sortie (60).

5. Aéronef selon la revendication 4,
**caractérisé en ce que** ladite au moins une liaison fluidique (55) est au moins partiellement disposée dans ladite carène (20).

6. Aéronef selon l'une quelconque des revendications 4 à 5,
**caractérisé en ce que** ladite poutre de queue (4) délimite ledit canal de ventilation forcée (50).

7. Aéronef selon l'une quelconque des revendications 4 à 5,
**caractérisé en ce que** ledit aéronef (1) comporte une conduite de ventilation (51) formant au moins partiellement ledit canal de ventilation forcée (50), ladite conduite de ventilation (51) étant disposée dans la poutre de queue (4).

8. Aéronef selon l'une quelconque des revendications 1 à 7,
**caractérisé en ce que** ladite au moins une ouverture de sortie (60) comporte une ouverture de sortie (61) dans ladite veine d'air (15).

9. Aéronef selon l'une quelconque des revendications 1 à 8,
**caractérisé en ce que** ledit rotor caréné (10) comporte un redresseur (30) dans ladite veine d'air (15), ledit redresseur (30) comprenant au moins un bras (31), ladite au moins une ouverture de sortie (60) comportant une ouverture de sortie de redresseur (64) ménagée sur ledit bras (31), ledit bras (31) étant au moins partiellement creux.

10. Aéronef selon la revendication 9,
**caractérisé en ce que** ledit bras (31) s'étend selon un axe (AX) d'une zone de bord d'attaque (311) vers une zone de bord de fuite (312), ladite ouverture de sortie de redresseur (30) étant située dans la zone de bord de fuite (312).

11. Aéronef selon l'une quelconque des revendications 1 à 10, **caractérisé en ce que** ladite au moins une ouverture de sortie (60) comporte une ouverture de sortie de convergent (612) ménagée dans un convergent (21) de la carène (20).

12. Aéronef selon l'une quelconque des revendications 1 à 11, **caractérisé en ce que** ladite au moins une ouverture de sortie (60) comporte une ouverture de sortie de divergent (611) ménagée dans un divergent (23) de la carène (20).

13. Aéronef selon l'une quelconque des revendications 1 à 12, **caractérisé en ce que** ladite veine d'air (15) s'étendant d'un section d'entrée (151) vers une section de sortie (152) selon un sens (102) de déplacement de l'air allant d'un convergent (21) vers un divergent (23) de la carène (20), ladite au moins une ouverture de sortie (60) comporte une ouverture de sortie externe (62, 63) dirigée vers la section de sortie (152) ou la section d'entrée (151).

14. Aéronef selon l'une quelconque des revendications 1 à 13, **caractérisé en ce que** ledit système de ventilation comporte un contrôleur de débit d'air (80).

15. Aéronef selon l'une quelconque des revendications 1 à14, **caractérisé en ce que** ledit échangeur thermique (41) est disposé dans la poutre de queue (4) ou dans une structure (2) solidaire de la poutre de queue (4).

16. Aéronef selon l'une quelconque des revendications 1 à 15, **caractérisé en ce que** ledit aéronef (1) comporte un moteur électrique (6) alimenté électriquement par ladite pile à combustible (5), ledit moteur électrique (6) mettant en rotation au moins un organe motorisé (3) participant au déplacement de l'aéronef (1) dans l'air.

## Patentansprüche

1. Luftfahrzeug (1) mit einer Brennstoffzelle (5) und einem Heckträger (4), der einen ummantelten Rotor (10) trägt, wobei der ummantelte Rotor (10) einen Mantel (20) umfasst, der einen Luftstrom (15) begrenzt, wobei der ummantelte Rotor (10) einen Rotor (11) umfasst, der in dem Luftstrom (15) drehbeweglich ist,
**dadurch gekennzeichnet, dass** das Luftfahrzeug (1) ein Kühlsystem (35) zum Kühlen der Brennstoffzelle (5) umfasst, wobei das Kühlsystem (35) mit einem Kühlkreislauf (40) versehen ist, in dem ein Wärmeträgerfluid (45) zirkuliert, wobei der Kühlkreislauf (40) eine Auffangleitung (42) umfasst, die in der Brennstoffzelle (5) oder neben der Brennstoffzelle (5) verläuft, wobei der Kühlkreislauf (40) einen Wärmetauscher (41) in Fluidverbindung mit der Auffangleitung (42) umfasst, wobei das Kühlsystem (35) ein Belüftungssystem umfasst, das mit mindestens einer Auslassöffnung (60) versehen ist, die in dem ummantelten Rotor (10) ausgebildet ist, um den Wärmetauscher (41) zumindest durch Ansaugen in einer Zirkulationsrichtung (101) zu belüften.

2. Luftfahrzeug nach Anspruch 1,
**dadurch gekennzeichnet, dass** das Luftfahrzeug (1) eine Einlassöffnung (71) aufweist, die in der Zirkulationsrichtung (101) vor dem Wärmetauscher (41) liegt und eine Luft (EXT) außerhalb des Wärmetauschers (41) fluidisch anbindet.

3. Luftfahrzeug nach Anspruch 2,
**dadurch gekennzeichnet, dass** das Luftfahrzeug eine Leitfläche (72) gegenüber der Einlassöffnung (71) aufweist.

4. Luftfahrzeug nach einem der Ansprüche 1 bis 3,
**dadurch gekennzeichnet, dass** das Belüftungssystem einen Zwangsbelüftungskanal (50) umfasst, der Belüftungsluft aufnimmt, die den Wärmetauscher (41) in der Zirkulationsrichtung (101) durchströmt,
wobei der Zwangsbelüftungskanal (50) zumindest teilweise durch den Heckträger (4) verläuft und mindestens eine Fluidverbindung (55) erreicht, die an der mindestens einen Auslassöffnung (60) mündet.

5. Luftfahrzeug nach Anspruch 4,
**dadurch gekennzeichnet, dass** die mindestens eine Fluidverbindung (55) mindestens teilweise in dem Mantel (20) angeordnet ist.

6. Luftfahrzeug nach einem der Ansprüche 4 bis 5,
**dadurch gekennzeichnet, dass** der Heckträger (4) den Zwangsbelüftungskanal (50) begrenzt.

7. Luftfahrzeug nach einem der Ansprüche 4 bis 5,
**dadurch gekennzeichnet, dass** das Luftfahrzeug (1) einen Belüftungskanal (51) aufweist, der zumindest teilweise den Zwangsbelüftungskanal (50) bildet, wobei der Belüftungskanal (51) in dem Heckträger (4) angeordnet ist.

8. Luftfahrzeug nach einem der Ansprüche 1 bis 7,
**dadurch gekennzeichnet, dass** die mindestens eine Auslassöffnung (60) eine Auslassöffnung (61) in den Luftstrom (15) umfasst.

9. Luftfahrzeug nach einem der Ansprüche 1 bis 8,
**dadurch gekennzeichnet, dass** der ummantelte Rotor (10) in dem Luftstrom (15) einen Leitapparat (30) aufweist, wobei der Leitapparat (30) mindestens einen Arm (31) umfasst, wobei die mindestens eine Auslassöffnung (60) eine Leitapparat-Auslassöffnung (64) umfasst, die an dem Arm (31) ausgebildet ist, wobei der Arm (31) mindestens teilweise hohl ist.

10. Luftfahrzeug nach Anspruch 9,
**dadurch gekennzeichnet, dass** sich der Arm (31) entlang einer Achse (AX) von einem Vorderkantenbereich (311) zu einem Hinterkantenbereich (312) erstreckt, wobei die Auslassöffnung des Leitapparats (30) in dem Hinterkantenbereich (312) angeordnet ist.

11. Luftfahrzeug nach einem der Ansprüche 1 bis 10,
**dadurch gekennzeichnet, dass** die mindestens eine Auslassöffnung (60) eine Konvergentenauslassöffnung (612) umfasst, die in einem Konvergenzbereich (21) des Mantels (20) ausgebildet ist.

12. Luftfahrzeug nach einem der Ansprüche 1 bis 11,
**dadurch gekennzeichnet, dass** die mindestens eine Auslassöffnung (60) eine Divergentenauslassöffnung (611) umfasst, die in einem Divergenzbereich (23) des Mantels (20) ausgebildet ist.

13. Luftfahrzeug nach einem der Ansprüche 1 bis 12,
**dadurch gekennzeichnet, dass** sich der Luftstrom (15) von einem Einlassabschnitt (151) zu einem Auslassabschnitt (152) in einer Luftbewegungsrichtung (102) von einem Konvergenzbereich (21) zu einem Divergenzbereich (23) des Rumpfes (20) erstreckt, wobei die mindestens eine Auslassöffnung (60) eine äußere Auslassöffnung (62, 63) umfasst, die zu dem Auslassabschnitt (152) oder dem Einlassabschnitt (151) hin gerichtet ist.

14. Luftfahrzeug nach einem der Ansprüche 1 bis 13,
**dadurch gekennzeichnet, dass** das Belüftungssystem einen Luftstromregler (80) umfasst.

15. Luftfahrzeug nach einem der Ansprüche 1 bis 14,
**dadurch gekennzeichnet, dass** der Wärmetauscher (41) im Heckträger (4) oder in einer fest mit dem Heckträger (4) verbundenen Struktur (2) angeordnet ist.

16. Luftfahrzeug nach einem der Ansprüche 1 bis 15,
**dadurch gekennzeichnet, dass** das Luftfahrzeug (1) einen Elektromotor (6) umfasst, der von der Brennstoffzelle (5) elektrisch versorgt wird, wobei der Elektromotor (6) mindestens ein motorisiertes Organ (3) in Drehung versetzt, das an der Fortbewegung des Luftfahrzeugs (1) in der Luft beteiligt ist.

## Claims

1. Aircraft (1) provided with a fuel cell (5) and a tail boom (4) supporting a shrouded rotor (10), the shrouded rotor (10) comprising a shroud (20) delimiting an air stream (15), the shrouded rotor (10) comprising a rotor (11) rotationally mobile in said air stream (15),
**characterised in that** said aircraft (1) comprises a cooling system (35) for cooling said fuel cell (5), the cooling system (35) being provided with a cooling circuit (40), in which a heat-transfer fluid (45) circulates, said cooling circuit (40) comprising a collection pipe (42) routed in the fuel cell (5) or next to the fuel cell (5), said cooling circuit (40) comprising a heat exchanger (41) in fluid communication with said collection pipe (42), said cooling system (35) comprising a ventilation system provided with at least one outlet opening (60) arranged in the shrouded rotor (10) for ventilating said heat exchanger (41) at least by suction according to a direction of circulation (101).

2. Aircraft according to claim 1,
**characterised in that** said aircraft (1) includes an inlet opening (71) upstream of the heat exchanger (41) according to the direction of circulation (101) and fluidly connecting air (EXT), external to the heat exchanger (41).

3. Aircraft according to claim 2,
**characterised in that** said aircraft includes a scoop (72) facing said inlet opening (71).

4. Aircraft according to any one of claims 1 to 3,
**characterised in that** the ventilation system includes a forced ventilation duct (50) accommodating ventilation air passing through said heat exchanger (41) according to the direction of circulation (101), said forced ventilation duct (50) passing at least in part through the tail boom (4) and reaching at least one fluid connection (55) leading to said at least one outlet opening (60).

5. Aircraft according to claim 4,
**characterised in that** said at least one fluid connection (55) is at least partially disposed in said shroud (20).

6. Aircraft according to either one of claims 4 or 5,
**characterised in that** said tail boom (4) delimits said forced ventilation duct (50).

7. Aircraft according to either one of claims 4 or 5,
**characterised in that** said aircraft (1) includes a ventilation pipe (51) forming at least partially said forced ventilation duct (50), said ventilation pipe (51) being disposed in the tail boom (4).

8. Aircraft according to any one of claims 1 to 7,
**characterised in that** said at least one outlet opening (60) includes an outlet opening (61) into said air stream (15).

9. Aircraft according to any one of claims 1 to 8,
**characterised in that** said shrouded rotor (10) includes a rectifier (30) in said air stream (15), said rectifier (30) comprising at least one arm (31), said at least one outlet opening (60) including a rectifier outlet opening (64) arranged on said arm (31), said arm (31) being at least partially hollow.

10. Aircraft according to claim 9,
**characterised in that** said arm (31) extends along an axis (AX) from a leading edge region (311) to a trailing edge region (312), said rectifier (30) outlet opening being situated in the trailing edge region (312).

11. Aircraft according to any one of claims 1 to 10,
**characterised in that** said at least one outlet opening (60) includes a convergence outlet opening (612) arranged in a convergence (21) of the shroud (20).

12. Aircraft according to any one of claims 1 to 11,
**characterised in that** said at least one outlet opening (60) includes a divergence outlet opening (611) arranged in a divergence (23) of the shroud (20).

13. Aircraft according to any one of claims 1 to 12,
**characterised in that** as said air stream (15) extends from an inlet section (151) to an outlet section (152) according to a direction (102) of movement of the air passing from a convergence (21) to a divergence (23) of the shroud (20), said at least one outlet opening (60) includes an external outlet opening (62), 63) directed to the outlet section (152) or the inlet section (151).

14. Aircraft according to any one of claims 1 to 13,
**characterised in that** said ventilation system includes an air flow controller (80).

15. Aircraft according to any one of claims 1 to 14,
**characterised in that** said heat exchanger (41) is disposed in the tail boom (4) or in a structure (2) integral with the tail boom (4).

16. Aircraft according to any one of claims 1 to 15,
**characterised in that** said aircraft (1) includes an electric motor (6) electrically powered by said fuel cell (5), said electric motor (6) rotating at least one motorised unit (3) contributing to moving the aircraft (1) in the air.
